# EUROPEAN PATENT SPECIFICATION

(11) **EP 3 063 834 B1**
(45) Date of publication and mention of the grant of the patent: **19.10.2022**
(21) Application number: 14786943.2
(22) Date of filing: 23.10.2014
(51) Int. Cl.: H01R 11/28, H01G 11/10, H01G 11/72, H01G 11/76, H01M 50/502

(54) **CONNECTOR FOR CONNECTING CELLULAR ELECTRICAL ELEMENTS**
VERBINDER ZUM VERBINDEN VON STROMZELLENELEMENTEN
CONNECTEUR POUR CONNECTER DES ÉLÉMENTS ÉLECTRIQUES CELLULAIRES

(30) Priority: 28.10.2013 DE 102013221872
(43) Date of publication of application: 07.09.2016
(73) Proprietor: TE Connectivity Germany GmbH, 64625 Bensheim (DE)
(72) Inventor: DRESSEL, Andre Martin, 68623 Lampertsheim (DE); GRZYWOK, Wilhelm, 81825 Munich (DE); HAUCK, Uwe, 14532 Kleinmachnow (DE); VAN SEBROECK, Bart, 64625 Bensheim (DE); BORMUTH, Peter, 64646 Heppenheim-Sonderbach (DE)
(74) Representative: Grünecker Patent- und Rechtsanwälte PartG mbB
(86) International application number: PCT/EP2014/072696
(87) International publication number: WO 2015/062944

(56) References cited:
- EP-A1- 0 986 114
- EP-A1- 0 986 114
- WO-A1-2012/102373
- WO-A1-2012/102373
- WO-A1-2013/018331
- WO-A1-2013/061871
- WO-A1-2013/061871
- WO-A1-2013/124966
- DE-A1- 19 810 746
- JP-A- 2013 016 381
- JP-A- 2013 016 381
- JP-A- 2013 037 777
- JP-A- 2013 152 918
- US-A1- 2005 110 458

## Description

The invention concerns a connector for connecting cellular electrical elements. Such cellular electrical elements may be connected serially and/or in parallel to one another.

For example, voltage sources and/or sinks configured as galvanic cells, capacitors, or supercapacitors (supercaps) may be connected with one another in a traction battery of an electrical vehicle in order to reach high voltages and/or capacities. Voltage sources may simultaneously act as voltage sinks in order to repeatedly supply and remove electrical energy. In a prior-art solution, differently configured housings are used for each application. This results in effort-intensive design and production, because the housings each must be designed individually and the appropriate tool components must be produced. In another prior-art solution, individual cells are connected by manually arranging a conductive connecting part between them. However, this results in a highly complex production process.

In WO 2013/061871 A1, a battery wiring module comprising several connection modules that are arranged behind each other is disclosed. JP 2013016381 A discloses a battery wiring module having several boxes arranged behind each other. WO 2012/102373 A1 discloses a battery connection module in which several boxes with lids are connected in a chain like manner. EP 098 6114 A1 shows several battery connecting plates in which contact elements are embedded in a lower part. WO 2013/018331 A1 shows a battery storage block having a plurality of cylindrical battery storage units, wherein at an upper side a contact element is held by a first retaining element and on the lower side a second contact element is held by a second retaining element. JP 2013 152918 A shows a wiring module for battery cells in which conductive elements are located between an upper moulded shell and a lower moulded shell. DE 198 10 746 A1 shows a surveillance system for battery cells in which a printed circuit board is located within the shell-shaped housing. WO 2013/124966 A1 discloses batteries surveillance module with a plurality of contact elements located in a moulded shell-shaped housing. From JP 2013-037777 A, a battery connection structure is known. The battery connection structure is made of a flexible sheet-like base body and a plurality of bus bars for connecting electrodes of adjacent battery cells. From US 2005/110458 A1, a battery pack for cordless products is known. The batteries can be connected by weld joints.

The invention seeks to supply a solution that is less complex and thus more cost-efficient.

This objective is met by a ribbon-shaped connector for connecting cellular electrical elements comprising a ribbon-shaped support element, a ribbon-shaped retaining element and a contact element, whereby the at least one contact element is arranged between the support element and the retaining element, wherein the retaining element and/or support element are separated parts of a ribbon material, wherein the support element is deep-drawn and comprises at least one receptacle for the at least one contact element. The objective is also met by a method of producing a ribbon-shaped connector according to claim 14.

A connector according to the invention is simpler and more cost-efficient to produce because the ribbon-shaped support element and the ribbon-shaped retaining element are simpler to produce than a housing. They can simply be rolled off of a supply roll and be separated. To produce a contact with a cellular electrical element, the connector has a contact element that is arranged between the support element and the retaining element. This provides a simple contact.

The solution of the invention can be further improved by various further developments and configurations, each of which is advantageous in itself, which can be combined with one another as desired.

The ribbon-shaped connector may have several contact elements arranged between the support element and the retaining element. This allows several cellular electrical elements to be put into contact. In particular, such contact elements can regularly be arranged one after another, e.g., at a fixed distance from one another. With such a configuration, for example, electrical elements arranged in rows may be contacted.

The support element and/or retaining element may have at least one opening at which the contact element is accessible. Such openings may be produced by stamping or cutting, or already be formed during the production of the ribbon-shaped support element or retaining element. A contact element may protrude at least partially into the opening or through the opening in order to ensure good contact.

The retaining element may have welding openings. The welding openings make it possible to weld the contact element to another electrical element, thus contacting the contact element. The support element may also have welding openings. The welding openings may serve to weld the contact element to a cellular electrical element. They may also be present on the support element or retaining element, or, e.g., cut out of the support element or retaining element by cutting or stamping. There need not necessarily be a weld on the welding openings themselves. They may also merely serve to allow for welding, e.g., by allowing for an electrical contact, such that, e.g., a weld may be made on an opposite side by current flow. The contact element may be beneath the welding openings.

It is particularly advantageous if the support element and retaining element have welding openings. The welding openings of the support and retaining elements may be aligned with another on both sides of the contact element. This allows the contact element to be welded to the cellular electrical element via the welded opening in the support element by pressing an electrode of a welding device onto the contact element, thus pressing the contact element onto the cellular electrical element. A current may then flow through the electrode and the contact element, and a weld may be made between the contact element and the cellular electrical element. In such configurations, thus, the mechanical connection between the contact element and the cellular electrical element, thus creating the electrical connection between the two, by means of the electrode of the welding device.

Rows of welding openings aligned in the longitudinal direction of the contact element may be arranged in the retaining and/or support element, in particular there may be two rows. The presence of two rows allows the contact elements to be welded not only in a single place, but in two places, thus establishing a more stable connection both in electrical and mechanical terms. Unlike a single, larger welded connection through which two welds may be made, the stability of the retaining and/or support element will be less compromised in the presence of two smaller welding openings.

The ribbon-shaped support element and/or the ribbon-shaped retaining element may have retaining holes in which part of the contact element is accessible, e.g., in order to retain it during welding.

The contact element may have retaining protrusions on which it can be retained. When mounted, the retaining protrusions may protrude into the retaining openings. The retaining openings and retaining protrusions allow the contact elements to be mechanically retained during welding. This separates the mechanical and electrical contact.

The contact element may be retained by the retaining element. For example, it may be retained by the retaining element by means of a form fit and/or a friction fit. A firmly bonded connection is also possible. In particular, the contact element may be retained by the retaining element between the retaining element and the support element. The contact element may be enclosed by the retaining element and the support element. This allows for a good form fit in all directions.

The ribbon-shaped retaining element and/or support element are separated parts of a ribbon material. For example, this ribbon material may be rolled off of a supply role, and parts of it may be separated. Depending on the application, parts of different lengths may be separated. This allows for high flexibility in production. If a larger number of electrical elements is to be connected, longer pieces may be cut off and accordingly more contact elements may be used. Before or after the separation, the ribbon material may have been treated, e.g., formed or parts of it may be stamped out. Alternatively, the retaining and/or support element may be produced in a different manner, e.g., by cutting out of a plate or board or injection moulding. The support and/or retaining element may comprise a thermoplastic material. For example, they may comprise a polymer. This allows for easy production and/or forming of the support and/or retaining element. For example, the retaining element may be thermoplastically formed during the production of the ribbon-shaped connector in order to ensure a good form fit with the contact and/or support element.

The support element is in accordance with the invention a deep-drawn plate or film.

The support element is formed such that receptacles, form-fitting elements, and/or openings for the contact element arise from the deep drawing. When using a deep-drawn plate, the support element ensures a stable configuration of the ribbon-shaped connector. This still allows for a certain degree of flexibility of the material. If greater flexibility is desired, the support element may be configured as a film.

In a background example, not covered by the invention, support element may be configured as a film, and, e.g., moulded onto a plate-shaped or film-shaped support element with a contact element. For example, the film may be thermoplastic and applied by heating to the support element such that a good form fit is obtained.

The retaining element may have an adhesive. For example, a glue may be applied to the retaining element, or the material of the retaining element itself may act as an adhesive. Such an adhesive may be, e.g., a hot-melt adhesive that at least partially melts when heated, thus establishing a form-fitting or firmly bonded connection with another element. The use of a material that serves as a hot-melt adhesive as the base material for the retaining element appears particularly advantageous. In such a configuration, the retaining element may be fused for attachment with the support element.

The retaining element may be glued to the support element. Between the two, an adhesive may be arranged, or the support element may be adhered with a retaining element consisting of a hot-melting material. The adhesion can attach and/or retain the contact element between the retaining element and the support element. The contact element may be exclusively adhered to the support element or exclusively adhered to the retaining element. Alternatively, the support element may be exclusively adhered to the retaining element, and the contact element may not be adhered to other elements. This allows for easier reuse of the contact element without the need for cleaning.

The retaining element may have an electrical conductor in contact with the contact element. Such a retaining element thus serves a dual purpose. It retains the contact element and simultaneously allows for electrical contacting of the contact element. A separate element for contacting the contact element is thus unnecessarily, allowing for a reduction of the number of components.

The electrical conductor may be embedded in the retaining element. This allows for simple handling. Simultaneously, parts of the retaining element may serve, e.g., to insulate the electrical conductor, thus reducing the materials required.

The retaining element may have several electrical conductors that can be contacted by electrical elements. The electrical conductors may be connected with one contact element each. In other places, they may be contactable from outside, e.g., in order to measure voltages. With such a configuration, for example, several cellular electrical elements may be simultaneously electrically contacted and inspected.

The retaining element may have several electrical conductors running parallel to one another. Such a configuration is particularly space-saving and may be useful in machining. In particular, the electrical conductors may run in the longitudinal direction of the connector. This allows several cellular electrical elements that are consecutive in the longitudinal direction of the connector to be contacted simultaneously. Possible retaining elements are, in particular, ribbon cables or flat flex cables (FFC).

At least one bundle of adjacent connectors may run between two rows of welding openings. This allows the welding openings to permit a mechanically stable connection due to their spatial distance. Simultaneously, a compact configuration is possible due to the conductors running between the two rows of welding openings.

A bundle of electrical conductors may be arranged on the edge of the retaining element. This allows for dimensional stability of the retaining element.

The contact element may be flake-shaped. In such a configuration, the contact element may be arranged in a particularly stable manner between the ribbon-shaped support element and the ribbon-shaped retaining element. Simultaneously, this configuration allows for high current density. For example, flake-shaped contact elements stamped and/or embossed from a metal sheet are particularly simple to produce.

The contact element may be sandwiched between the retaining element and the support element, in particular if the contact element is flake-shaped. A connector may have a sandwich structure having several layers.

The contact element may have a tongue. The tongue may serve to facilitate contact. The tongue may lead to a bundle of conductors. The tongue may spatially overlap with several conductors, but only be in electrical contact with a single conductor. When there are several contact elements, one contact element may respectively be in contact with one conductor.

In order to allow for compact configuration, the tongue may extend between two adjacent welding openings of a row of welding openings.

The tongue may protrude in a conductor area of the retaining element. The tongue may be in contact here with one or more conductors.

Several electrical conductors may run in one ribbon direction, and the tongue may protrude perpendicularly to the ribbon direction into a conductor area of the retaining element. This provides a compact and simultaneously secure configuration.

A contact element be a cell connector connecting two cells. Such a contact element may, e.g., connect two cells in parallel or serially, and they need not be individually contacted.

The electrical elements may be voltage sources and/or sinks, in particular galvanic cells. The connector may, of course, also be used on other cellular electrical elements, e.g., capacitors, in particular supercaps.

The invention is explained in greater detail below by way of example, by reference to various embodiments and the related drawings. The further developments and configurations shown may combined and omitted in any desired way, depending on which advantages are desired in a particular application.

The drawings show the following:
- Fig. 1: a schematic perspective view of a first embodiment of a ribbon-shaped connector according to the invention;
- Fig. 2: a schematic perspective view of a second embodiment of a ribbon-shaped connector according to the invention on a traction battery;
- Fig. 3: a schematic perspective view of the second embodiment of a ribbon-shaped connector according to the invention;
- Fig. 4: a schematic perspective view of the ribbon-shaped connector according to the invention from fig. 3 on a battery.

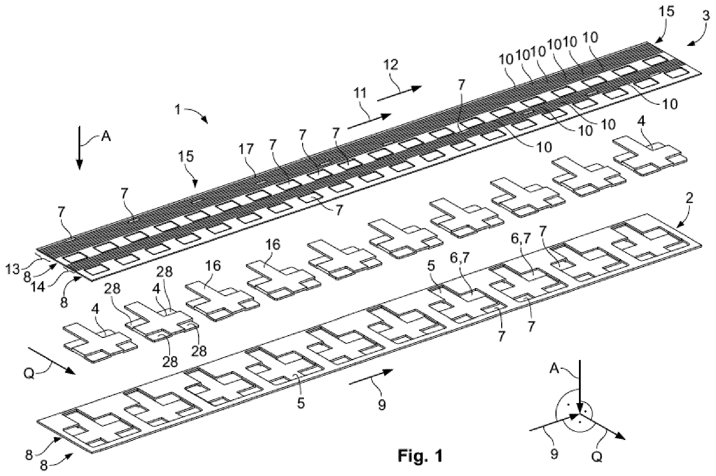

Fig. 1 shows a ribbon-shaped connector 1 according to the invention for connecting cellular electrical elements (not shown) in an exploded view. The ribbon-shaped connector 1 comprises a ribbon-shaped support element 2 and a ribbon-shaped retaining element 3. Between the support element 2 and the retaining element 3, several contact elements 4 are arranged.

The ribbon-shaped support element 2 is configured as an elongated plate. It was separated from a longer ribbon material, e.g., a ribbon material on a supply role, and then deep drawn, i.e., thermoplastically formed. Receptacles 5 for contact elements 4 were moulded into it, into which the contact elements 4 can be inserted and partially form fit with the support element 2. The support element 2 further includes openings 6, in particular welding openings 7, through which the contact elements 4, when connected, at least partially protrude and through which the contact elements 4 are welded to corresponding elements of the cellular electrical elements. Depending on the application, it may also be unnecessary to weld the contact elements 4 to the cellular electrical elements. For example, pressing may suffice in order to obtain an adequate electrical contact.

The welding openings 7 may already be present on the ribbon material from which a part is cut, or be stamped or moulded in after separation, e.g., by deep drawing.

The primary product for the support element 2 need not necessarily be from a supply roll. For example, parts may be separated from a plate- or board-shaped element, from which a support element 2 is moulded. It may also be produced by injection moulding.

The support element 2 shown is configured as a plate in order to ensure good stability and simultaneously a certain degree of flexibility. If greater flexibility of the finished ribbon-shaped connector 1 is desired, the support element 2 may also be configured as a film.

The support element 2 has two rows 8 of welding openings 7. Within one row 8, the welding openings 7 are arranged regularly one after another along a longitudinal direction 9 of the support element 2. This allows several cellular electrical elements to be contacted in a row.

The exploded view of fig. 1 may also be interpreted as a pre-assembly position. During assembly, the contact elements 4 are inserted into the receptacles 5 of the support element 2. Then, the ribbon-shaped retaining element 3 is applied. The retaining element 3 is melted on by heating. This makes the retaining element 3 melt on more easily and softens it. It is form fitting on and around the contact elements 4 and the support element 2, such that a partial form fit is obtained that remains when the retaining element 3 cools off and hardens. Simultaneously, an adhesive bond is created by the melting. The retaining element 3 consists of a hot-melting material that at least partially firmly bonds with the support element 2 and the contact elements 4. The retaining element 3 is thus glued to the support element 2. The retaining element 3 is also glued to the contact element 4. In an alternative configuration, the retaining element 3 may only be adhered to the support element 2. This may facilitate reuse of the contact elements 4, because there is no need for complicated cleaning after removal from the ribbon-shaped connector 1 if they are to be used in another ribbon-shaped connector 1.

The contact elements 4 are retained by the retaining element 3. Here, this occurs by connecting the support element 2 to the retaining element 3 and additionally by connecting the retaining element 3 with the contact element 4. When finished, the contact elements 4 are embedded between the support element 2 and the retaining element 3 and completely enclosed by them except for the openings. This provides good mechanical protection and simultaneously serves as insulation for the contact elements 4.

Like the support element 2, the retaining element 3 is ribbon-shaped. It may also be separated from a longer ribbon material. For example, it may be a separated part of a ribbon previously wrapped around a supply roll.

The ribbon-shaped connector 1 shown with a ribbon-shaped support element 2 and a ribbon-shaped retaining element 3 is more cost-efficient to produce compared to injection-moulded connectors with housings, as used in the prior art. This is due on the one hand to the fact that ribbon material is easier to produce and that the assembly of the ribbon-shaped connector according to the invention is simpler. Furthermore, the ribbon-shaped connector 1 can be more flexibly used for various applications. Depending on how many electrical elements are to be contacted, the ribbon-shaped connector 1 may be produced in a desired length. Compared to the prior art, in which a separate housing must be designed and produced as an injection-moulded component for each desired length, it is sufficient with the ribbon-shaped connector 1 according to the invention to use a corresponding number of contact elements 4 and to cut the retaining element 3 and the support element 2 to the appropriate length. Such a method is much more cost-efficient than the previous method.

The ribbon-shaped retaining element 3 in fig. 1 has two rows of welding openings 7, whereby each of the welding openings 7 on the retaining element 3 is aligned with a welding opening 7 on the support element. The welding openings 7 of the support element 2 and the retaining element 3 are thus aligned with another on both sides of the contact elements 4. The welding openings 7 on the retaining element 3 serve to allow for welding with a welding device. Through the welding openings 7 on the retaining element 3, an electrode of the welding device may electrically contact the contact element 4 and simultaneously press the contact element 4 along a pressing direction A onto a corresponding element of the cellular electrical element (not shown) arranged under the support element 2. Then, current can be conducted through this connection, such that the contact element 4 is welded onto the electrical element. The alignment of the welding openings 7 on the retaining element 3 and the support element 2 can thus simplify the welding process.

The support element 2 and the retaining element 3 may consist of a thermoplastic material, e.g., a thermoplastic polymer. In an alternative embodiment, the support element 2 or the retaining element 3 may also consist of another material, e.g., a duroplastic or other insulating material. The contact elements 4 consist of an electrically conductive material in order to allow for a good contact.

The retaining element 3 has several electrical conductors 10 embedded in the retaining element 3. The electrical conductors 10 run along a longitudinal direction 11 of the retaining element 3 and a longitudinal direction 12 of the ribbon-shaped connector 1.

The electrical conductors 10 run adjacent to one another, in particular parallel to one another. A first bundle 13 of electrical conductors 10 is arranged on an edge 15 of the retaining element 3, thus ensuring mechanical stability. A second bundle 14 of electrical conductors 10 runs between two rows 8 of welding openings 7 on the retaining element 3. By spacing the two rows 8, the contact elements 4 may be welded on two points spaced apart from one another in a transverse direction Q, thus making them more stable and less susceptible to nodding movements. In order to ensure the most compact possible configuration, the intermediate space between the rows 8 of welding openings contains the second bundle 14 of electrical conductors 10.

Each of the electrical conductors 10 is in electrical contact with a contact element 4. To this end, the retaining element 3 has additional welding openings 7 on the top and bottom on which the insulating material was removed, thus allowing the electrical conductors 10 to be welded to the contact elements 4.

The electrical conductors 10 lead along the longitudinal direction 12 of the connector 1, and may be contacted, e.g., in an area not shown here of other electrical elements, e.g., in order to measure the voltage on the individual contact elements 4. Such a connection with another electrical element may be made, e.g., on the end of the retaining element 3. In an alternative configuration, the retaining element 3 may also protrude beyond the support element 2, and an electrical contact may be made in the protruding part. For example, the electrical lines there may be exposed and/or open into a plug.

The contact elements 4 shown are flake-shaped. This configuration allows them to be easily inserted between the two layers of the retaining element 3 and the support element 2. Simultaneously, this can allow for high current capability and load capacity. They may be formed by stamping and/or embossing from a metal sheet. The connector 1 has a sandwich structure, whereby the contact elements 4 are arranged and retained between a layer formed by the retaining element 3 and a layer formed by the support element 2.

The contact elements 4 each have a tongue 16, protruding into a conductor area 17 of the retaining element 3. The tongue 16 leads to the first bundle 13 of conductors 10. Each of the conductors 10 of the first bundle 13 is connected with a tongue 16 of a contact element 4. This conductor 10 is insulated from the other contact elements 4 and their tongues 16 by the insulating material of the retaining element 3 because the electrical conductors 10 are embedded in the retaining element 3 and are only accessible in the area of the welding openings 7.

The tongues 16 each extend between two adjacent welding openings 7 of a row 8 of welding openings 7 on the retaining element 3. This ensures a compact configuration in the longitudinal direction 12 of the connector 1. The tongues 16 thus extend perpendicularly to the longitudinal direction 12 of the electrical connector 1.

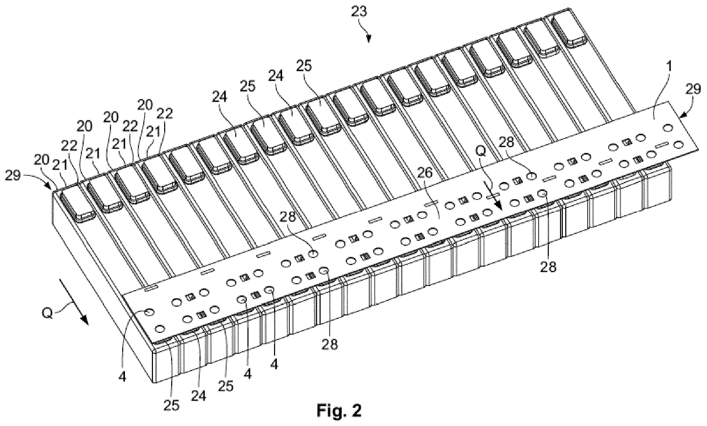

Fig. 2 shows a second embodiment of a ribbon-shaped connector 1 attached to several cellular electrical elements 20. The cellular electrical elements 20 are voltage sources and/or sinks 21 in the form of galvanic cells 22, which are part of a traction battery 23, as can be found, e.g., in electrically powered vehicles for the recurrent withdrawal and storage of electrical energy. The cellular electrical elements 20 each have an anode 24 and a cathode 25. In the middle area 26 of the electrical connector 1, one contact element 4 each connects the anode 24 on a first galvanic cell 22 with a cathode 25 of a second galvanic cell 22. In the configuration shown here, the adjacent contact element 4 in the connector 1 then connects the anode 24 of a third galvanic cell 22 with the cathode 25 of a fourth galvanic cell 22, etc. Not shown here is another connector 1, which appropriately connects the electrodes on the top in fig. 2, thus displaced from the first connector 1 by one cell 22. Overall, thus, the cells 22 are serially connected with one another, such that the voltages of the galvanic cells 22 are added. The contact elements 4 thus act here as cell connectors 27 that connect the galvanic cells 22 with one another.

Two consecutive contact points 28 in a transverse direction Q each contact a single electrode of a galvanic cell 22. The following two contact points 28 in the longitudinal direction 12 of the electrical connector are arranged on the next galvanic cell 22, which is arranged here, too, on a single electrode. The contact elements 4 arranged on opposite ends 29 are only in contact with a single electrode of a galvanic cell 22. They protrude beyond the rest of the traction battery 23. They can be contacted on the two exposed contact points 28 and transmit the voltage to other electrical elements.

The electrical conductors 10 are each connected with one contact element 4, such that voltage present on this contact element 4 can be monitored on an ongoing basis.

Alternative to the configuration shown here, in which two connectors 1 are necessary in order to establish a continuous, zig-zagging current path, all anodes 24 and cathodes 25 of the cellular elements 20 may also be arranged in a straight line one after another in a single row. Then, a single connector 1 can suffice in order to establish a continuous current path. A first contact element connects an anode 24 of a first cellular element 20 with a cathode 25 of a second cellular element 20. The adjacent contact element 4 in the connector 1 then connects the anode 24 of the second cellular element 20 with the cathode 25 of a third cellular element 20, etc.

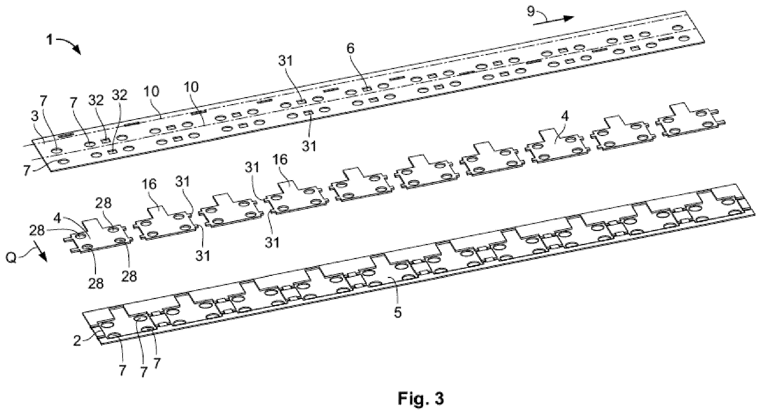

Fig. 3 shows the second embodiment of a ribbon-shaped connector 1 in an exploded view. It consists of a ribbon-shaped support element 2, a ribbon-shaped retaining element 3, and several contact elements 4 arranged between the ribbon-shaped support element 2 and the ribbon-shaped retaining element 3. The ribbon-shaped support element 2 and the ribbon-shaped retaining element 3 are ach separate parts of a previously longer ribbon, e.g., one wrapped around a supply roll.

In the ribbon-shaped retaining element 3, electrical conductors 10 are embedded, which are each connected with one contact element 4. The electrical conductors 10 are only indicated schematically here; only the electrical conductors 10 for two contact elements are shown in dotted lines.

The contact elements 4 of the second embodiment are flat, in particular even flatter than those of the embodiment of fig. 1. The tongues 16 directly depart from a flat area and stick out from this flat area against the transverse direction Q.

Here, the contact points 28 of the contact elements 4 are round, in particular circular. Such a configuration may, e.g., be easier to produce than the configuration of fig. 1. The welding openings 7 on the ribbon-shaped support element and the ribbon-shaped retaining element 3 are accordingly also circular.

Additionally, the contact elements 4 have retaining protrusions 31, which protrude from the contact elements 4 in and against the longitudinal direction 12 of the connector 1. The contact elements 4 may be mechanically retained during attachment to the voltage sources and/or sinks 21 via retaining openings 32 arranged on the retaining element 3. This makes it unnecessary, e.g., for the welding device to build up a mechanical pressure for fixation. The retaining and welding are separate in this configuration.

The contact elements 4 may be separate parts of a ribbon material that was embossed and/or stamped before or after separation, e.g., in order to form the contact points 28.

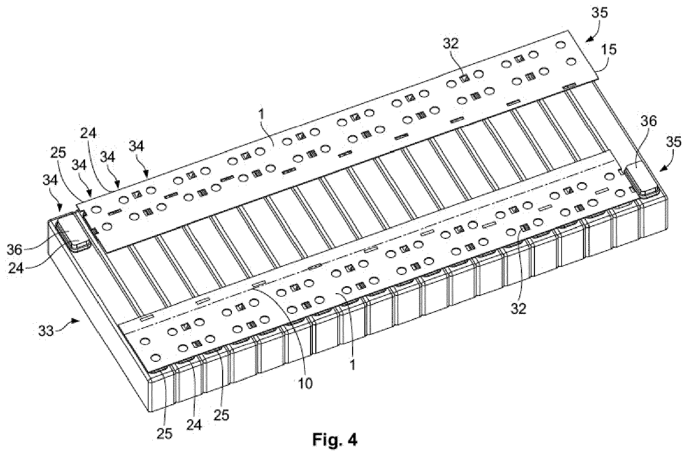

In fig. 4, two ribbon-shaped connectors 1, as shown in fig. 3, are shown arranged on a battery 33. The battery 33 consists of individual batteries 34, whereby the individual batteries each alternates in orientation, i.e., in the two rows 35 of electrodes, one anode 24 and one cathode 25 each are staggered. A first row 35 starts with an anode 24; a second row 35 starts with a cathode 25. The contact elements 4 shown covered here each connect an anode 24 of a first individual battery 34 with a cathode 25 of a second individual battery 34 or the cathode 25 of a first individual battery 34 with the anode 24 of a second individual battery 34. The two ribbon-shaped connectors 1 are displaced by one individual battery 34. In the configuration shown here, the voltage is thus not built up along a single ribbon-shaped connector 1. Rather, it is necessary for the two ribbon-shaped connectors to be present, because the circuit does not run straight along a connector 1, but rather through the contact elements 4 and transversely between the two ribbon-shaped connectors 1. On the two terminal electrodes 36, the summed voltage is then tapped. In order to control the voltage on each contact element 4 individually, electrical connectors 10 are embedded in the ribbon-shaped retaining elements 3, which may, e.g., be contacted individually on one end of the ribbon-shaped connector 1. In fig. 4, once again, a single electrical connector 10 is indicated only schematically.

The drawings only show the use of the connector 1 on the galvanic cells 22 by way of example only. Of course, it also be used on other cellular electrical elements 20, e.g., capacitors, in particular supercaps.

### Reference Numerals

- 1: Ribbon-shaped connector
- 2: Ribbon-shaped support element
- 3: Ribbon-shaped retaining element
- 4: Contact element
- 5: Receptacle
- 6: Opening
- 7: Welding opening
- 8: Row of welding openings
- 9: Longitudinal direction of the support element
- 10: Electrical conductor
- 11: Longitudinal direction of the support element
- 12: Longitudinal direction of the connector
- 13: First bundle
- 14: Second bundle
- 15: Edge
- 16: Tongues
- 17: Conductor area
- 20: Cellular electrical element
- 21: Voltage source and/or sink
- 22: Galvanic cell
- 23: Traction battery
- 24: Anode
- 25: Cathode
- 26: Middle area
- 27: Cell connector
- 28: Contact point
- 29: End of the connector
- 31: Retaining protrusion
- 32: Retaining opening
- 33: Battery
- 34: Individual battery
- 35: Row of elements
- 36: Terminal electrode
- A: Pressing direction
- Q: Transverse direction

## Claims

1. Ribbon-shaped connector (1) for connecting cellular electrical elements (20), comprising a ribbon-shaped support element (2), a ribbon-shaped retaining element (3) and at least one contact element (4), whereby the at least one contact element (4) is arranged between the support element (2) and the retaining element (3), wherein the retaining element (3) and/or the support element (2) are separated parts of a ribbon material, **characterized in that** the support element (2) is deep-drawn i.e. thermoplastically formed and comprises at least one receptacle (5) moulded into it for the at least one contact element (4).

2. Ribbon-shaped connector (1) according to claim 1, whereby the retaining element (3) has welding openings (7).

3. Ribbon-shaped connector (1) according to any of claim 1 or 2, whereby the support element (2) and the retaining element (3) have welding openings (7).

4. Ribbon-shaped connector (1) according to any of claims 1 or 3, whereby the contact element (4) is retained by the retaining element (3).

5. Ribbon-shaped connector (1) according to any of claims 1 - 4, whereby the retaining element (3) has an adhesive.

6. Ribbon-shaped connector (1) according to any of claims 1 - 5, whereby the retaining element (3) has an electrical conductor (10) connected with the contact element (4).

7. Ribbon-shaped connector (1) according to claim 6, whereby the electrical conductor (10) is embedded in the retaining element (3).

8. Ribbon-shaped connector (1) according to any of claims 1 - 7, whereby the retaining element (3) has several electrical conductors (10) that can be contacted by the cellular electrical elements (20).

9. Ribbon-shaped connector (1) according to any of claims 1 - 8, whereby the retaining element (3) has several electrical conductors (10) running parallel to one another.

10. Ribbon-shaped connector (1) according to any of claims 1 - 9, whereby the contact element (4) is flake-shaped.

11. Ribbon-shaped connector (1) according to any of claims 1 - 10, whereby the contact element (4) has a tongue (16).

12. Ribbon-shaped connector (1) according to claim 11, whereby the tongue (16) protrudes into a conductor area (17) of the retaining element (3).

13. Ribbon-shaped connector (1) according any of claims 11 or 12, whereby several electrical conductors run in a longitudinal direction (12) of the connector (1) and the tongue (16) protrudes perpendicularly to the longitudinal direction (12) into a conductor area (17) of the retaining element (3).

14. Method of producing a ribbon-shaped connector (1) for connecting cellular electrical elements (20), comprising a ribbon-shaped support element (2), a ribbon-shaped retaining element (3) and at least one contact element (4), whereby the at least one contact element (4) is arranged between the support element (2) and the retaining element (3), wherein the retaining element (3) and/or the support element (2) are separated from of a ribbon material, **characterized in that** the support element (2) is formed by deep-drawing and **in that** at least one receptacle (5) for the at least one contact element (4) is formed into the support element (2) during the deep-drawing, i.e. thermoplastically forming, process.

15. Method according to claim 14, wherein the ribbon material is rolled off of a supply roll.

16. Method according to claim 14 or 15, wherein an opening is stamped or cut into the support element (2) and/or the retaining element (3).

17. Method according to one of claims 14 to 16, wherein the retaining element (3) is configured as a film and moulded onto a plate-shaped or film-shaped support element (2) with the contact element (4).

18. Method according to one of claims 14 to 17, wherein the retaining element (3) is glued onto the support element (2).

## Patentansprüche

1. Bandförmiger Verbinder (1) zum Verbinden zellularer elektrischer Elemente (20), der ein bandförmiges Trägerelement (2), ein bandförmiges Halteelement (3) sowie wenigstens ein Kontaktelement (4) umfasst, wobei das wenigstens eine Kontaktelement (4) zwischen dem Trägerelement (2) und dem Halteelement (3) angeordnet ist, das Halteelement (3) und/oder das Trägerelement (2) abgetrennte Teile eines Bandmaterials sind, **dadurch gekennzeichnet, dass** das Trägerelement (2) tiefgezogen, d.h. thermoplastisch geformt, ist, und wenigstens eine Aufnahme (5) für das wenigstens eine Kontaktelement (4) umfasst, die in selbiges hinein geformt ist.

2. Bandförmiger Verbinder (1) nach Anspruch 1, wobei das Halteelement (3) Schweißöffnungen (7) aufweist.

3. Bandförmiger Verbinder (1) nach einem der Ansprüche 1 oder 2, wobei das Trägerelement (2) und das Halteelement (3) Schweißöffnungen (7) aufweisen.

4. Bandförmiger Verbinder (1) nach einem der Ansprüche 1 oder 3, wobei das Kontaktelement (4) durch das Halteelement (3) gehalten wird.

5. Bandförmiger Verbinder (1) nach einem der Ansprüche 1 - 4, wobei das Halteelement (3) einen Klebstoff aufweist.

6. Bandförmiger Verbinder (1) nach einem der Ansprüche 1 - 5, wobei das Halteelement (3) einen elektrischen Leiter (10) aufweist, der mit dem Kontaktelement (4) verbunden ist.

7. Bandförmiger Verbinder (1) nach Anspruch 6, wobei der elektrische Leiter (10) in das Halteelement (3) eingebettet ist.

8. Bandförmiger Verbinder (1) nach einem der Ansprüche 1 - 7, wobei das Halteelement (3) mehrere elektrische Leiter (10) aufweist, mit denen die zellulären elektrischen Elemente (20) in Kontakt kommen können.

9. Bandförmiger Verbinder (1) nach einem der Ansprüche 1 - 8, wobei das Halteelement (3) mehrere elektrische Leiter (10) aufweist, die parallel zueinander verlaufen.

10. Bandförmiger Verbinder (1) nach einem der Ansprüche 1 - 9, wobei das Kontaktelement (4) plättchenförmig ist.

11. Bandförmiger Verbinder (1) nach einem der Ansprüche 1 - 10, wobei das Kontaktelement (4) eine Zunge (16) aufweist.

12. Bandförmiger Verbinder (1) nach Anspruch 11, wobei die Zunge (16) in einen Leiterbereich (17) des Halteelementes (3) hinein vorsteht.

13. Bandförmiger Verbinder (1) nach einem der Ansprüche 11 oder 12, wobei mehrere elektrische Leiter in einer Längsrichtung (12) des Verbinders (1) verlaufen und die Zunge (16) senkrecht zu der Längsrichtung (12) in einen Leiterbereich (17) des Halteelementes (3) hinein vorsteht.

14. Verfahren zum Herstellen eines bandförmigen Verbinders (1) zum Verbinden zellularer elektrischer Elemente (20), der ein bandförmiges Trägerelement (2), ein bandförmiges Halteelement (3) sowie wenigstens ein Kontaktelement (4) umfasst, wobei das wenigstens eine Kontaktelement (4) zwischen dem Trägerelement (2) und dem Halteelement (3) angeordnet ist, das Halteelement (3) und/oder das Trägerelement (2) von einem Bandmaterial abgetrennt sind/ist, **dadurch gekennzeichnet, dass** das Trägerelement (2) mittels Tiefziehen ausgebildet wird und dass wenigstens eine Aufnahme (5) für das wenigstens eine Kontaktelement (4) in dem Trägerelement (2) während des Tiefziehens, d. h. eines Prozesses zum thermoplastischen Formen, ausgebildet wird.

15. Verfahren nach Anspruch 14, wobei das Bandmaterial von einer Vorratsrolle abgerollt wird.

16. Verfahren nach Anspruch 14 oder 15, wobei eine Öffnung in das Trägerelement (2) und/oder das Halteelement (3) hinein gestanzt oder geschnitten wird.

17. Verfahren nach einem der Ansprüche 14 bis 16, wobei das Halteelement (3) als eine Folie ausgebildet ist und mit dem Kontaktelement (4) auf ein plattenförmiges oder folienförmiges Trägerelement (2) aufgeformt wird.

18. Verfahren nach einem der Ansprüche 14 bis 17, wobei das Halteelement (3) auf das Trägerelement (2) aufgeklebt wird.

## Revendications

1. Connecteur en forme de ruban (1) destiné à connecter des éléments électriques cellulaires (20), comprenant un élément de support en forme de ruban (2), un élément de retenue en forme de ruban (3) et au moins un élément de contact (4), grâce à quoi le ou les éléments de contact (4) sont agencés entre l'élément de support (2) et l'élément de retenue (3), l'élément de retenue (3) et/ou l'élément de support (2) étant des composants séparés d'un matériau en ruban,
**caractérisé en ce que** l'élément de support (2) est embouti c'est-à-dire formé par voie thermoplastique et comprend au moins une embase (5) moulée pour le ou les éléments de contact (4).

2. Connecteur en forme de ruban (1) selon la revendication 1, dans lequel l'élément de retenue (3) comporte des ouvertures de soudage (7).

3. Connecteur en forme de ruban (1) selon l'une quelconque des revendications 1 ou 2, dans lequel l'élément de support (2) et l'élément de retenue (3) comportent des ouvertures de soudage (7).

4. Connecteur en forme de ruban (1) selon l'une quelconque des revendications 1 ou 3, dans lequel l'élément de contact (4) est retenu par l'élément de retenue (3).

5. Connecteur en forme de ruban (1) selon l'une quelconque des revendications 1 à 4, dans lequel l'élément de retenue (3) comporte un adhésif.

6. Connecteur en forme de ruban (1) selon l'une quelconque des revendications 1 à 5, dans lequel l'élément de retenue (3) comporte un conducteur électrique (10) relié à l'élément de contact (4).

7. Connecteur en forme de ruban (1) selon la revendication 6, dans lequel le conducteur électrique (10) est intégré dans l'élément de retenue (3).

8. Connecteur en forme de ruban (1) selon l'une quelconque des revendications 1 à 7, dans lequel l'élément de retenue (3) comporte plusieurs conducteurs électriques (10) qui peuvent être mis en contact par les éléments électriques cellulaires (20).

9. Connecteur en forme de ruban (1) selon l'une quelconque des revendications 1 à 8, dans lequel l'élément de retenue (3) comporte plusieurs conducteurs électriques (10) circulant parallèlement les uns aux autres.

10. Connecteur en forme de ruban (1) selon l'une quelconque des revendications 1 à 9, dans lequel l'élément de contact (4) est de forme lamellaire.

11. Connecteur en forme de ruban (1) selon l'une quelconque des revendications 1 à 10, dans lequel l'élément de contact (4) comporte une languette (16).

12. Connecteur en forme de ruban (1) selon la revendication 11, dans lequel la languette (16) dépasse dans une zone conductrice (17) de l'élément de retenue (3).

13. Connecteur en forme de ruban (1) selon l'une quelconque des revendications 11 ou 12, dans lequel plusieurs conducteurs électriques circulent dans la direction longitudinale (12) du connecteur (1), et la languette (16) dépasse perpendiculairement à la direction longitudinale (12) dans une zone conductrice (17) de l'élément de retenue (3).

14. Procédé de fabrication d'un connecteur en forme de ruban (1) destiné à connecter des éléments électriques cellulaires (20), comprenant un élément de support en forme de ruban (2), un élément de retenue en forme de ruban (3) et au moins un élément de contact (4), grâce à quoi le ou les éléments de contact (4) sont agencés entre l'élément de support (2) et l'élément de retenue (3), l'élément de retenue (3) et/ou l'élément de support (2) étant séparés d'un matériau en ruban, **caractérisé en ce que** l'élément de support (2) est formé par emboutissage profond et **en ce que** la ou les embases (5), destinées à un ou des éléments de contact (4), sont formées dans l'élément de support (2) pendant le processus d'emboutissage profond, c'est-à-dire de façonnage par voie thermoplastique.

15. Procédé selon la revendication 14, dans lequel le matériau en ruban est déroulé d'une bobine d'alimentation.

16. Procédé selon la revendication 14 ou la revendication 15, dans lequel une ouverture est poinçonnée ou découpée dans l'élément de support (2) et/ou l'élément de retenue (3).

17. Procédé selon l'une des revendications 14 à 16, dans lequel l'élément de retenue (3) est configuré sous forme d'un film et moulé sur un élément de support (2) de forme plate ou en forme de film avec l'élément de contact (4).

18. Procédé selon l'une des revendications 14 à 17, dans lequel l'élément de retenue (3) est collé sur l'élément de support (2).
